# EUROPEAN PATENT SPECIFICATION

(11) **EP 3 450 288 B1**
(45) Date of publication and mention of the grant of the patent: **26.02.2020**
(21) Application number: 17195800.2
(22) Date of filing: 10.10.2017
(51) Int. Cl.: B62J 1/26

(54) **MEMORY SADDLE WITH DOUBLE ELASTIC FOAM ASSEMBLY FOR VIBRATION ABSORPTION**
FORMGEDÄCHTNISSATTEL MIT DOPPELTER ELASTISCHER SCHAUMSTOFFANORDNUNG ZUR SCHWINGUNGSDÄMPFUNG
SELLE À MÉMOIRE À DOUBLE ENSEMBLE DE MOUSSE ÉLASTIQUE POUR L'ABSORPTION DES VIBRATIONS

(30) Priority: 28.08.2017 TW 106212813 U
(43) Date of publication of application: 06.03.2019
(73) Proprietor: DDK Group Co., Ltd., BS8811 Brandar Seri Begawan (BN)
(72) Inventor: SUNG, YING-CHIAO, 40757 TAICHUNG CITY (TW)
(74) Representative: Karakatsanis, Georgios

(56) References cited:
- CN-Y- 2 902 848
- DE-U1- 9 419 281
- US-A- 5 348 369

## Description

### BACKGROUND OF THE INVENTION

### 1. Field of the Invention

The present invention relates to a vibration-absorbing structure of a saddle, and in particular to a double elastic foam assembly for a saddle.

### 2. The Related Arts

In the conventional designs of saddles of bicycles or electric vehicles, to protect a cyclist from excessive shocks and vibration in riding the bicycle or electrical vehicle, helical springs are often provided on the underside of the saddle to function as a primary measure for vibration absorption. Assembly of such a vibration-absorbing structure is generally difficult and requires a large amount of human labor. In practical operations, the helical springs may be just good in absorbing vibrating forces of relatively large magnitudes.

As to the main body of the saddle, different materials, such as foaming materials, rubber materials, and fabric, have been used to make the saddle in order to provide vibration absorption to the cyclist while riding. This, although simplifying assembly of components, provides no satisfactory performance of vibration absorption in actual uses. Document US5348369 shows a known design of a bicycle saddle with a first elastic material layer and a high-elasticity foam material layer formed on the first foam material layer, the saddle being adapted to receive a cyclist to sit thereon so that two portions of the saddle that correspond to portions of the cyclist associated with the ischiums of the cyclist are defined as ischiatic pressure bearing zones.

### SUMMARY OF THE INVENTION

In view of the above, the primary objective of the present invention is to provide a memory saddle that includes a double elastic foam assembly in order to provide a bicycle or an electric vehicle with a saddle featuring better vibration-absorbing performance in actual uses.

A technical solution adopted in the present invention is that a saddle is structured to comprise a first foam material layer and a high-elasticity foam material layer formed on the first foam material layer. The first foam material layer is formed with a first hollowed zone at a location thereof corresponding to an ischiatic pressure bearing zone of the saddle. A second foam material layer is received in and coupled to the first hollowed zone. The high-elasticity foam material layer is formed with a second hollowed zone at a location corresponding to the ischium and a memory foam layer is received in and coupled to the second hollowed zone such that the memory foam layer is in alignment, in a vertical direction, with the second foam material layer received in the first hollowed zone.

In the above saddle, the high-elasticity foam material layer of the saddle has a surface that is provided with and covered by a water-resistant surface layer.

In the above saddle, the high-elasticity foam material layer is formed of a material that is selected as a foaming material of one of polyurethane and ethylene vinyl acetate copolymer.

In the above saddle, the first foam material layer is formed of a polypropylene material.

In the above saddle, the second foam material layer is formed of a thermoplastic rubber material.

Concerning efficacy, when a cyclist sits on the saddle, the ischiatic pressure bearing zone of the saddle receives and bears a vibration force that the ischium of the cyclist applied thereto in a vertical direction and the memory foam layer and the second foam material layer of the double elastic foam assembly of the present invention collaboratively absorb the vibration force to thereby effectively improve the cyclist's comfortableness of riding.

### BRIEF DESCRIPTION OF THE DRAWINGS

The present invention will be apparent to those skilled in the art by reading the following description of preferred embodiments of the present invention, with reference to the attached drawings, in which:
FIG. 1 is a side elevational view, in a schematic form, illustrating a saddle combined with a double elastic foam assembly according to the present invention;
FIG. 2 is a perspective view, in a schematic form, illustrating the saddle combined with the double elastic foam assembly according to the present invention;
FIG. 3 is a cross-sectional view taken along line A-A of FIG. 2;
FIG. 4 is a cross-sectional view similar to FIG. 3, illustrating a condition that a cyclist is about to sit on the saddle; and
FIG. 5 is a cross-sectional view, illustrating a condition that the cyclist sits on the saddle with the ischiums of the cyclist applying a force to the saddle.

### DETAILED DESCRIPTION OF THE PREFERRED EMBODIMENTS

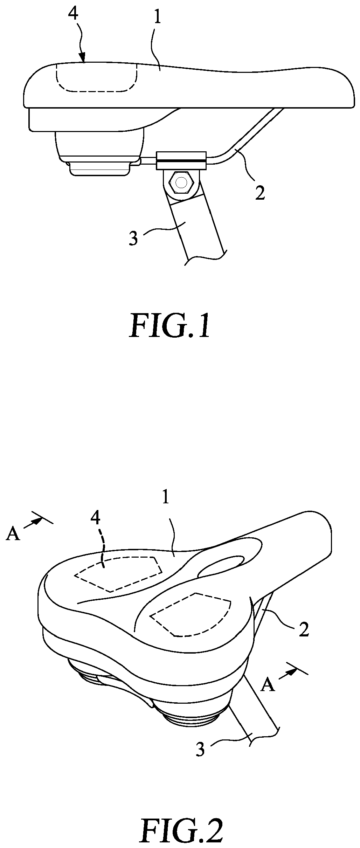

Referring to FIGS. 1 and 2, FIG. 1 is a side elevational view, in a schematic form, illustrating a saddle combined with a double elastic foam assembly according to the present invention, and FIG. 2 is a perspective view, in a schematic form, illustrating the saddle combined with the double elastic foam assembly according to the present invention. As shown in the drawings, a saddle 1 is coupled, at a bottom thereof, to a support frame 2, and the support frame 2 is further coupled to an upright post 3. The saddle 1 can be a saddle of a bicycle, an electric bicycle or an electric vehicle.

When a cyclist sits on the saddle 1, two zones of the saddle 1 that correspond to portions of the cyclist's body associated with the ischiums of the cyclist are defined as ischiatic pressure bearing zones P. In this invention, a pair of elastic foam assemblies 4 are arranged in the ischiatic pressure bearing zones P respectively of the saddle 1, as shown in FIG. 2. The arrangement of the elastic foam assemblies 4 provides better vibration absorption of the ischiatic pressures supported by the cyclist while riding.

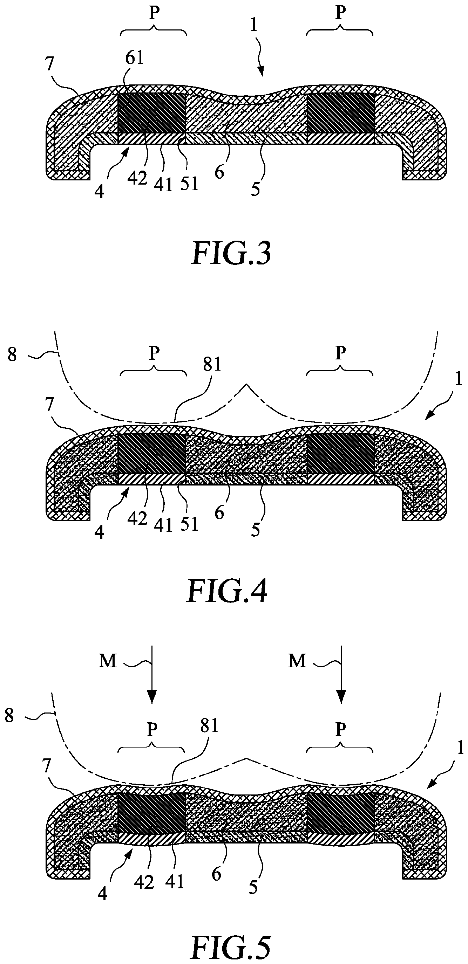

FIG. 3 is a cross-sectional view taken along line A-A of FIG. 2. As shown in the drawing, the saddle 1 comprises a first foam material layer 5 and a high-elasticity foam material layer 6 formed on the first foam material layer 5. The high-elasticity foam material layer 6 may be provided, on a surface thereof, with a water-resistant surface layer 7 covering the surface.

The first foam material layer 5 is formed with a first hollowed zone 51 at a location thereof corresponding to each of the ischiatic pressure bearing zones P of the saddle 1, and the first hollowed zone 51 receives and is coupled to a second foam material layer 41 filled therein. The second foam material layer 41 is made of a material that has a material density that is smaller that a material density of a material that makes the first foam material layer 5 so that the second foam material layer 41 exhibits a better capability of vibration absorption.

In manufacture, the first foam material layer 5 can be made of a material that is selected as a polypropylene (PP) material that is subjected to a foam material injection molding operation to form a structure that comprises the first hollowed zones 51. And, then, a second foam material injection molding operation is applied to the first hollowed zones 51 to fill the second foam material layers 41 therein. The second foam material layer 41 can be made of a material that is selected as thermoplastic rubber (TPR) material.

The high-elasticity foam material layers 6 are formed with second hollowed zones 61 at locations respectively corresponding to the ischiatic pressure bearing zones **P** and the second hollowed zones 61 each receives a memory foam layer 42 arranged therein and coupled thereto, such that the memory foam layers 42 are respectively in alignment, in a vertical direction, to the second foam material layers 41 received in the first hollowed zones 51 of the first foam material layer 5. The memory foam layers 42 and the second foam material layers 41 collectively form the double elastic foam assembly 4 of this invention.

In manufacture, the high-elasticity foam material layer 6 can be made of a material that is selected as a foaming material of polyurethanes (PU) or ethylene vinyl acetate (EVA), which is subjected to a foam material injection molding operation to form a structure comprising the second hollowed zones 61. And, then, a second foam material injection molding operation is applied to the second hollowed zones 61 to fill the memory foam layers 42 therein. The memory foam layer 42 is primarily made of a polyurethane high-molecule material, exhibiting property of both viscosity and elasticity, so that when the memory foam layer 42 is deformed with an external force applied thereto, the memory foam layer 42 may slowly restore the original shape, after the force is removed, so as to absorb the energy of vibration and impact.

FIG. 4 is a cross-sectional view similar to FIG. 3, illustrating a condition that a cyclist 8 is about to sit on the saddle 1, wherein the ischiums 81 of the cyclist 8 correspond to the ischiatic pressure bearing zones **P** of the saddle 1 and is generally in alignment with the memory foam layers 42 and the second foam material layers 41.

Referring also to FIG. 5, when the ischiatic pressure bearing zones **P** of the saddle 1 receive and bear vibration forces **M** that the ischiums 81 of the cyclist 8 apply thereto in a vertical direction, the memory foam layers 42 and the second foam material layers 41 collaboratively absorb the vibration forces to thereby provide better vibration absorption of the ischiatic pressures supported by the cyclist 8 while riding.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A double elastic foam assembly for a saddle (1) including a first foam material layer (5) and a high-elasticity foam material layer (6) formed on the first foam material layer (5), the saddle (1) being adapted to receive a cyclist (8) to sit thereon so that two portions of the saddle that correspond to portions of the cyclist (8) associated with the ischiums (81) of the cyclist (8) are defined as ischiatic pressure bearing zones, **characterized in that** the double elastic foam assembly (4) comprises:
the first foam material layer (5) formed with a pair of first hollowed zones (51) at locations corresponding to the ischiatic pressure bearing zones of the saddle (1), each of the first hollowed zones receiving therein a second foam material layer (41); and
the high-elasticity foam material layer (6) formed with a pair of second hollowed zones (61) at locations corresponding to the ischiums (81) of the cyclist (8), each of the second hollowed zones (61) receiving therein a memory foam layer (42) that is in alignment, in a vertical direction, with the second foam material layer (41) of the first hollowed zone (51);
wherein the ischiatic pressure bearing zones of the saddle (1) receive and bear vibration forces applied by the ischiums (81) of the cyclist (8) thereto in the vertical direction, and the memory foam layers (42) and the second foam material layers (41) collaboratively absorb the vibration forces.

2. The double elastic foam assembly as claimed in Claim **1, characterized in that** the high-elasticity foam material layer (6) of the saddle (1) has a surface that is provided with and covered by a water-resistant surface layer.

3. The double elastic foam assembly as claimed in Claim **1, characterized in that** the high-elasticity foam material layer (6) is formed of a material that is selected as a foaming material of one of polyurethane and ethylene vinyl acetate copolymer.

4. The double elastic foam assembly as claimed in Claim **1, characterized in that the** first foam material layer (5) is formed of a polypropylene material.

5. The double elastic foam assembly as claimed in Claim 1, **characterized in that** the second foam material layer (41) is formed of a thermoplastic rubber material.

## Patentansprüche

1. Doppelte elastische Schaumstoffanordnung für einen Sattel (1), die eine erste Schaummaterialschicht (5) und eine Schaummaterialschicht mit hoher Elastizität (6), die auf der ersten Schaummaterialschicht (5) ausgebildet ist, beinhaltet, wobei der Sattel (1) dazu ausgelegt ist, einen Fahrradfahrer (8), der darauf sitzt, aufzunehmen, derart dass zwei Abschnitte des Sattels, die Abschnitten des Fahrradfahrers (8), die dem Ischium (81) des Fahrradfahrers (8) zugeordnet sind, entsprechen, als Ischium-Druckauflagezonen definiert sind, **dadurch gekennzeichnet, dass** die doppelte elastische Schaumstoffanordnung (4) Folgendes umfasst:
die erste Schaummaterialschicht (5), die mit einem Paar erster ausgehöhlter Zonen (51) an Stellen, die den Ischium-Druckauflagezonen des Sattels (1) entsprechen, ausgebildet ist, wobei jede der ersten ausgehöhlten Zonen eine zweite Schaummaterialschicht (41) darin aufnimmt; und
die Schaummaterialschicht mit hoher Elastizität (6), die mit einem Paar zweiter ausgehöhlter Zonen (61) an Stellen, die den Ischia (81) des Fahrradfahrers (8) entsprechen, ausgebildet ist, wobei jede der zweiten ausgehöhlten Zonen (61) eine Memory-Foam-Schicht (42) darin aufnimmt, die in einer vertikalen Richtung mit der zweiten Schaummaterialschicht (41) der ersten ausgehöhlten Zone (51) ausgerichtet ist;
wobei die Ischium-Druckauflagezonen des Sattels (1) Vibrationskräfte erfahren und tragen, die von den Ischia (81) des Fahrradfahrers (8) in vertikaler Richtung darauf wirken, und die Memory-Foam-Schichten (42) und die zweiten Schaummaterialschichten (41) zusammen die Vibrationskräfte absorbieren.

2. Doppelte elastische Schaumstoffanordnung nach Anspruch 1, **dadurch gekennzeichnet, dass** die Schaummaterialschicht mit hoher Elastizität (6) des Sattels (1) eine Oberfläche aufweist, die mit einer wasserabweisenden Oberflächenschicht versehen und damit überzogen ist.

3. Doppelte elastische Schaumstoffanordnung nach Anspruch 1, **dadurch gekennzeichnet, dass** die Schaummaterialschicht mit hoher Elastizität (6) aus einem Material, das aus einem aus Polyurethan und Ethylenvinylacetatcopolymer als ein Schaummaterial ausgewählt ist, besteht.

4. Doppelte elastische Schaumstoffanordnung nach Anspruch 1, **dadurch gekennzeichnet, dass** die erste Schaummaterialschicht (5) aus einem Polypropylenmaterial besteht.

5. Doppelte elastische Schaumstoffanordnung nach Anspruch 1, **dadurch gekennzeichnet, dass** die zweite Schaummaterialschicht (41) aus einem thermoplastischen Kautschukmaterial besteht.

## Revendications

1. Double assemblage en mousse élastique pour selle (1) incluant une première couche de matériau en mousse (5) et une couche de matériau en mousse de haute élasticité (6) formée sur la première couche de matériau en mousse (5), la selle (1) étant apte à recevoir un cycliste (8) assis dessus de manière à ce que deux parties de la selle qui correspondent à des parties du cycliste (8) associées aux ischions (81) du cycliste (8) soient définies sous forme de zones supportant la pression ischiatique, **caractérisé en ce que** le double assemblage en mousse élastique (4) comprend :
la première couche de matériau en mousse (5) conformée avec une paire de premières zones creusées (51) à des endroits correspondant aux zones supportant la pression ischiatique de la selle (1), chacune des zones creusées recevant à l'intérieur une seconde couche de matériau en mousse (41) ; et
la couche de matériau en mousse à haute élasticité (6) conformée avec une paire de secondes zones creusées (61) à des endroits correspondant aux ischions (81) du cycliste (8), chacune des secondes zones creusées (61) recevant à l'intérieur une couche de mousse à mémoire (42) qui est en alignement, dans un sens vertical, avec la seconde couche de matériau en mousse (41) de la première zone creusée (51) ;
les zones supportant la pression ischiatique de la selle (1) recevant et supportant des forces de vibration appliquées dessus par les ischions (81) du cycliste (8) dans le sens vertical, et les couches de mousse à mémoire (42) et les secondes couches de matériau en mousse (41) absorbant de manière collaborative les forces de vibration.

2. Double assemblage en mousse élastique selon la revendication 1, **caractérisé en ce que** la couche de matériau en mousse à haute élasticité (6) de la selle (1) a une surface qui est pourvue et recouverte d'une couche surfacique résistant à l'eau.

3. Double assemblage en mousse élastique selon la revendication 1, **caractérisé en ce que** la couche de matériau en mousse à haute élasticité (6) est composée d'un matériau qui est sélectionné sous forme d'un matériau moussant parmi les copolymères de polyuréthane et d'éthylène vinyle acétate.

4. Double assemblage en mousse élastique selon la revendication 1, **caractérisé en ce que** la première couche de matériau en mousse (5) est formée d'un matériau à base de polypropylène.

5. Double assemblage en mousse élastique selon la revendication 1, **caractérisé en ce que** la seconde couche de matériau en mousse (41) est formée d'un matériau à base de caoutchouc thermoplastique.
